# EUROPEAN PATENT SPECIFICATION

(11) **EP 3 611 590 B1**
(45) Date of publication and mention of the grant of the patent: **15.03.2023**
(21) Application number: 17905318.6
(22) Date of filing: 11.04.2017
(51) Int. Cl.: G05D 1/02, G01C 21/32, A47L 11/24

(54) **METHOD FOR CREATING GRID MAP OF INTELLIGENT ROBOT**
VERFAHREN ZUR ERZEUGUNG EINER KOORDINATENNETZKARTE EINES INTELLIGENTEN ROBOTERS
PROCÉDÉ DE CRÉATION D'UNE CARTE À QUADRILLAGE D'UN ROBOT INTELLIGENT

(43) Date of publication of application: 19.02.2020
(73) Proprietor: Amicro Semiconductor Co., Ltd., Hengqin New District, Zhuhai City Guangdong 519000 (CN)
(72) Inventor: XIAO, Gangjun, Zhuhai Guangdong 519000 (CN); LI, Ming, Zhuhai Guangdong 519000 (CN)
(74) Representative: Mozzi, Matteo
(86) International application number: PCT/CN2017/080136
(87) International publication number: WO 2018/187943

(56) References cited:
- EP-A2- 2 390 746
- CN-A- 102 138 769
- CN-A- 103 099 586
- CN-A- 103 472 823
- CN-A- 105 652 876
- CN-A- 106 873 601
- CN-A- 107 065 872
- JP-A- 2008 021 178
- JP-A- 2011 198 173
- KR-A- 20110 092 158
- US-A1- 2005 000 543
- US-A1- 2007 293 985
- US-A1- 2009 198 375
- US-A1- 2014 129 027
- US-A1- 2016 271 795

## Description

### Technical Field

The present invention relates to the technical field of intelligent control, and in particular to a method for creating a grid map of an intelligent robot.

### Background

As a key factor in the transformation of world economy and industrial growth mode, intelligent robots are entering a new stage of development. Intelligent robots are manufacturing equipment, equipment tools, and consumer goods with perception, decision, and execution. The manufacturing equipment intelligent robots used in production processes and environments are called industrial robots. The consumer goods intelligent robots for personal or domestic services are called home service robots. The equipment tool intelligent robots for operation and maintenance in special environments are called special service robots.

A household sweeping robot is taken as an example. The household sweeping robot is also called an automatic sweeping machine, an intelligent vacuum cleaner, a robot vacuum cleaner, etc., and is a kind of intelligent household appliance, which can automatically clean a floor in a room with certain artificial intelligence.

The sweeping robot covers the entire room area according to a certain path plan to complete the purpose of traversal. Path planning includes random traversal and planning traversal.

The random traversal means that the sweeping robot tentatively covers an operation area according to a certain movement algorithm, such as a triangular trajectory or a pentagonal trajectory. When the sweeping robot encounters at least one obstacle, a corresponding steering function is executed. This method is a low-cost strategy with time to exchange for space, such as 100% coverage excluding time spent. Random coverage does not require positioning, an environmental map and path planning. This method is used by most of sweeping robots namely iRobot currently.

The planning traversal means that an environment map is created during the sweeping robot walking process, the environment map is analyzed in real time and a new path plan is completed, and all the rooms are cleaned. This method is highly efficient and can complete cleaning as quickly as possible while maintaining coverage.

Cleaning planning is to solve three problems as follows.

At problem one, the environment map is created, and a position of the sweeping robot is determined.

At problem two, the sweeping robot is navigated from an initial position to a target position, and the sweeping robot may automatically avoid any obstacle in a navigation process.

At problem three, a method for traversal of the entire room is provided.

There are various solutions for problem one, such as a grid method, an artificial potential field method, a template model method, or an artificial intelligence method.

The artificial potential field method is to design a motion of a robot in a surrounding environment into a motion in a potential field. There are two kinds of potential energy: a repulsion pole and a gravitation pole. Areas and obstacles that are not expected to enter are repulsion poles, and areas recommended to pass are gravitation poles. A combined force of gravitation and repulsion is used as an acceleration force of the sweeping robot to control a direction of motion of the intelligent robot and calculate the position of the sweeping robot. However, this method usually has problems of local minimum points and excessive calculations.

The template model method is to match environmental information, obtained by a traversal robot according to prior knowledge and previous environmental maps with a predefined template. This method requires memories of a pre-defined environment model and a pre-defined template, so it is not easy to deal with changing environment, such as an obstacle suddenly appeared in a process of the traversal robot.

The artificial intelligence method includes a fuzzy control algorithm, neural network path planning, a genetic algorithm, etc. These algorithms are computationally intensive and mostly in the laboratory research phase, with less practical use.

The grid method uses a grid of the same size to divide a workspace of the sweeping robot and uses a grid array to represent the environment. A state of each grid includes one of the followings: the sweeping robot being in a free space and the sweeping robot being in at least one obstacle space. This method is simple and easy to implement, which brings a lot of convenience to realization of path planning, and has the ability to represent irregular obstacles. However, the disadvantage of this method is that representation efficiency is not high, and there is a contradiction between space-time overhead and precision. When the grid is divided to be large, a storage of environmental information is small, planning time is short, environment resolution is reduced, and ability to find paths in a dense environment is weakened. When the grid is divided to be small, the environment resolution is high, the ability to find paths in a dense environment is strong, but the storage of environmental information is large. So the size of the grid directly affects the performance of a control algorithm.
US2016/271795A1, US2005/000543A1, KR20110092158A, US2007/293985A1, US2014/129027A1 and EP 2390746A2 provide respective intelligent robot with mapping system belonging to the state of the art.

### Summary

At least some embodiments of present invention provide a method for utilizing the maximum efficiency of a grid map, which can meet precision requirements of an intelligent robot and meet sweeping range requirements of the intelligent robot. The object of the present invention is achieved by the invention set out in the appended set of claims.

The method for creating the grid map of the intelligent robot provided by at least some embodiments of the present invention can utilize the maximum efficiency of a grid map, which can meet the precision requirements of an intelligent robot and meet the sweeping range requirements of the intelligent robot.

### Brief Description of the Drawings

Fig. 1 is a block composition diagram of an intelligent robot in a method for creating a grid map according to an embodiment of the present invention.
Fig. 2 is a main flowchart of a method for creating a grid map according to an embodiment of the present invention.
Fig. 3 is a flowchart of a method for calculating obstacle grid coordinates in a method for creating a grid map according to an embodiment of the present invention.
Fig. 4 is a flowchart of initiating map translation in a method for creating a grid map according to an embodiment of the present invention.
Fig. 5 is a flowchart of determining a map translation grid number in a method for creating a grid map according to an embodiment of the present invention.
Fig. 6 is a flowchart of realizing a map translation operation in a method for creating a grid map according to an embodiment of the present invention.
Fig. 7 is a flowchart of realizing data reading of a buffer operation in a map translation process in a method for creating a grid map according to an embodiment of the present invention.
Fig. 8 is a flowchart of realizing data writing of a buffer operation in a map translation process in a method for creating a grid map according to an embodiment of the present invention.

### Detailed Description

The specific implementation manners present invention will be further described below with reference to the accompanying drawings.

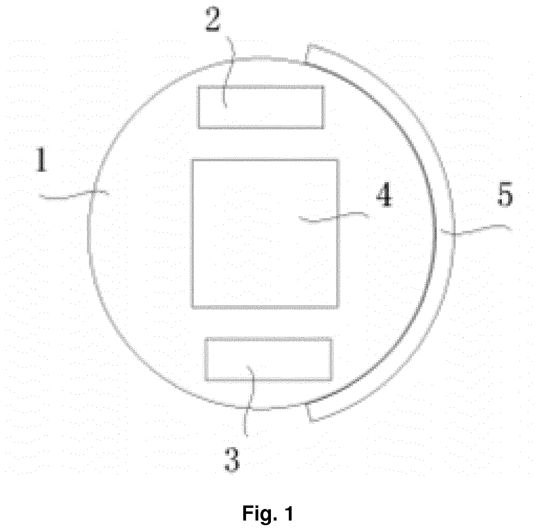

As shown in Fig. 1, in a method for creating a grid map of an intelligent robot provided by the present embodiment, the intelligent robot includes an action body 1, a main control component 4, a sensor set 5, a power component, and a regional operation component. The action body 1 includes a housing and action wheels 2, 3. The sensor set 5 includes a collision detection sensor, an obstacle detection sensor, a distance information sensor, and an angle information sensor, all of which are electrically connected with the main control component.

Specifically, the collision detection sensor is configured to determine, when the intelligent robot encounters at least one obstacle, that the current collision with the at least one obstacle occurs, and notify the main control component 4. A fall prevention detection sensor is configured to determine, when the intelligent robot is suspended, that it is currently in a dangerous state, and notify the main control component 4. The obstacle detection sensor is configured to detect whether the at least one obstacle is present around the intelligent robot and notify the main control component 4. The obstacle detection sensor includes the fall prevention detection sensor and a peripheral detection sensor. The peripheral detection sensor is composed of front, front left, front right, left, and right infrared ranging sensors. The distance information sensor is a wheel encoder, and the angle information sensor is a gyroscope. The regional operation component refers to a component that performs certain functional operations on an area where the intelligent robot is located, and may be at least one of a cleaning component, a camera component, a humidification component, a dehumidification component, and a pest control component. The present embodiment takes the cleaning component as an example. That is, the intelligent robot described in the present embodiment is a sweeping robot.

In the method for creating the grid map of the intelligent robot provided in the present embodiment, a grid map is used when creating the map. Distance information acquired by the distance information sensor, angle information acquired by the angle information sensor, collision information acquired by the collision detection sensor, and obstacle information acquired by the obstacle detection sensor are used for creating the grid map, and at least one normal passing point, at least one obstacle point and at least one edgewise point are recorded. The intelligent robot updates the grid map while moving, and updates the status to the grid map as long as the intelligent robot passes. Understandably, as the grid is smaller, the precision is higher, but due to a limitation of a memory and an operation speed, a square is selected as a shape of each grid and each side length of the square is one third of a diameter of the intelligent robot.

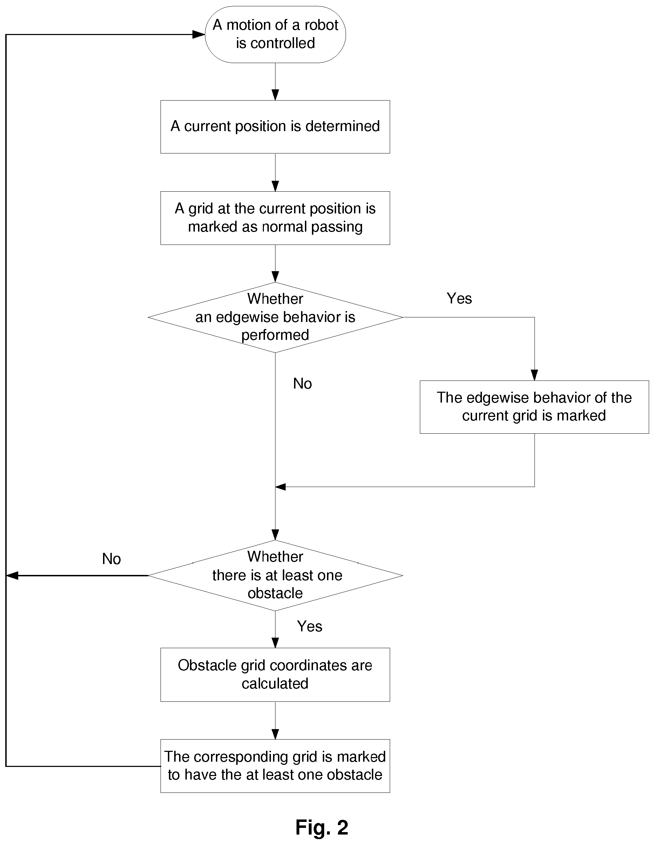

As shown in Fig. 2, the method for creating a grid map of an intelligent robot provided by the present embodiment includes the following steps.

At step (1), a motion of the intelligent robot is controlled.

At step (2), it is detected whether an action of the intelligent robot at a current position is an edgewise behavior and detecting whether there is at least one obstacle at the current position. When the action at the current position is the edgewise behavior but there is no obstacle at the current position, proceeding to step (3a). When the action at the current position is the edgewise behavior and there is at least one obstacle at the current position, proceeding to step (3b). When the action at the current position is not the edgewise behavior but there is at least one obstacle, proceeding to step (3c). And when the action at the current position is not the edgewise behavior and there is no obstacle, proceeding to step (3d).

At step (3a), a grid at the current position on the grid map is marked as an edgewise behavior point, and the process returns to step (1).

At step (3b), the grid at the current position on the grid map is marked as the edgewise behavior point, coordinates of a grid where the at least one obstacle is located are calculated and the grid corresponding to the at least one obstacle on the grid map is marked as at least one obstacle point, and the process returns to step (1).

At step (3c), the grid at the current position on the grid map is marked as a normal passing point, coordinates of a grid where the at least one obstacle is located are calculated and the grid corresponding to the at least one obstacle on the grid map is marked as at least one obstacle point, and the process returns to step (1).

At step (3d), the grid at the current position on the grid map is marked as a normal passing point and the process returns to step (1).

In the flowchart of Fig. 2, some of the above methods are represented for better performance, and the edgewise behavior determination and the at least one obstacle determination are successively represented. In fact, the two determinations are partially sequential.

The created grid map is saved in the main control component 4 and managed by the main control component 4. The representation of the grid map may be as follows. A black grid indicates that the intelligent robot does not mark the grid. A green grid represents the normal passing point determined by the intelligent robot. A red grid represents the at least one obstacle point sensed by the obstacle detection sensor. A blue grid represents the at least one obstacle point at a collision position detected by the collision detection sensor. And a white grid represents the edgewise behavior point.

Each grid is represented by an 8-bit number. The higher four bits of the 8-bit number record area information and indicate an area where each grid is located. The lower four bits of the 8-bit number are used for representing actual information of the grid map. A Oth bit indicates whether the intelligent robot has reached each grid. A value 0 of the Oth bit indicates that the intelligent robot has not reached this grid, and a value 1 of the Oth bit indicates that the intelligent robot has not reached this grid. A 1 st bit indicates whether each grid has at least one obstacle. A value 0 of the 1 st bit indicates that this grid has no obstacle, and a value 1 of the 1st bit indicates that this grid has at least one obstacle. A 2nd bit indicates whether the intelligent robot passes through each grid when the intelligent robot performing the edgewise behavior. A value 1 of the 2nd bit indicates that the intelligent robot passes through this grid, and a value 0 of the 2nd bit indicates that the intelligent robot does not pass through this grid. And a 3rd bit is a reserved bit.

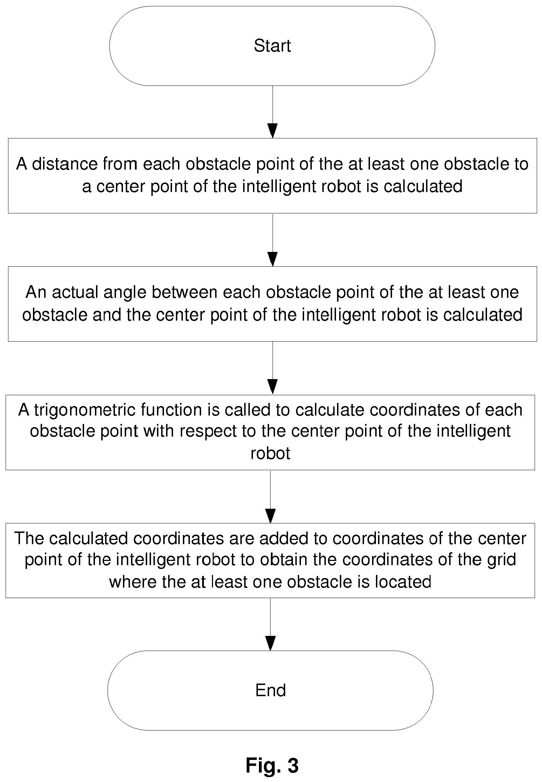

As shown in Fig. 3, in the method for creating a grid map of an intelligent robot provided by the present embodiment, the method of calculating the coordinates of a grid where the at least one obstacle is located includes the following steps.

At step A, a distance from each obstacle point of the at least one obstacle to a center point of the intelligent robot is calculated.

At step B, an actual angle between each obstacle point of the at least one obstacle and the center point of the intelligent robot is calculated.

At step C, a trigonometric function is called to calculate coordinates of each obstacle point with respect to the center point of the intelligent robot.

At step D, the calculated coordinates are added to coordinates of the center point of the intelligent robot to obtain the coordinates of the grid where the at least one obstacle is located.

The at least one obstacle point detected by the collision detection sensor and the at least one obstacle point sensed by the obstacle detection sensor are treated differently in the grid map (differentially labeled). As described above, the red grid represents the at least one obstacle point sensed by the obstacle detection sensor, and the blue grid represents the at least one obstacle point of a collision detected by the collision detection sensor, which may, of course, be uniformly labeled (for example, all labeled in red). However, regardless of which sensor senses at least one obstacle, the distance and angle may be calculated as follows.

A distance from each obstacle point of the at least one obstacle to the center point of the intelligent robot is equal to a sum of a distance detected by a sensor and a radius of the intelligent robot.

An angle between each obstacle point of the at least one obstacle and the center point of the intelligent robot is equal to a sum of a front angle of the intelligent robot and a difference of angle at which a position of the sensor deviates from the front of the intelligent robot.

In the method for creating the grid map of the intelligent robot provided in the present embodiment, the starting point of the intelligent robot is generally located at the center point of the grid map. The grid map is fixed in size, and if a prototype always sweeps in one direction, the grid map is easily out of bounds. The grid map is out of bounds in one direction, and the grid map in the opposite direction of this direction is empty and unused.

The following describes a method for translating the entire grid map in real time according to the situation that the actually used map is out of bounds, so that the actually used map is always located at the center point of the entire grid map until the length or width of the actually used map truly reaches the limit of the entire grid map.

At step (1) of the method for creating the grid map of the intelligent robot as described above, when each time the motion of the intelligent robot is controlled, a grid map translation sub-process is first executed. This sub-process includes the following steps.

At step a, it is detected whether it is necessary to translate the entire grid map. And when a grid actually used in one direction of an x axis or a y axis of the grid map has reached a boundary of the entire grid map and the remaining grids are not used in an opposite direction of an x axis or a y axis of the grid map, the process proceeds to step b to start the translation of the entire grid map, and otherwise, the sub-process is quit.

At step b, the number of grids to be actually translated at this time is determined according to a difference between the number of previous offset grids of the x axis and the y axis and the number of current offset grids of the x axis and the y axis.

At step c, the entire grid map is translated according to the number of grids to be actually translated at this time.

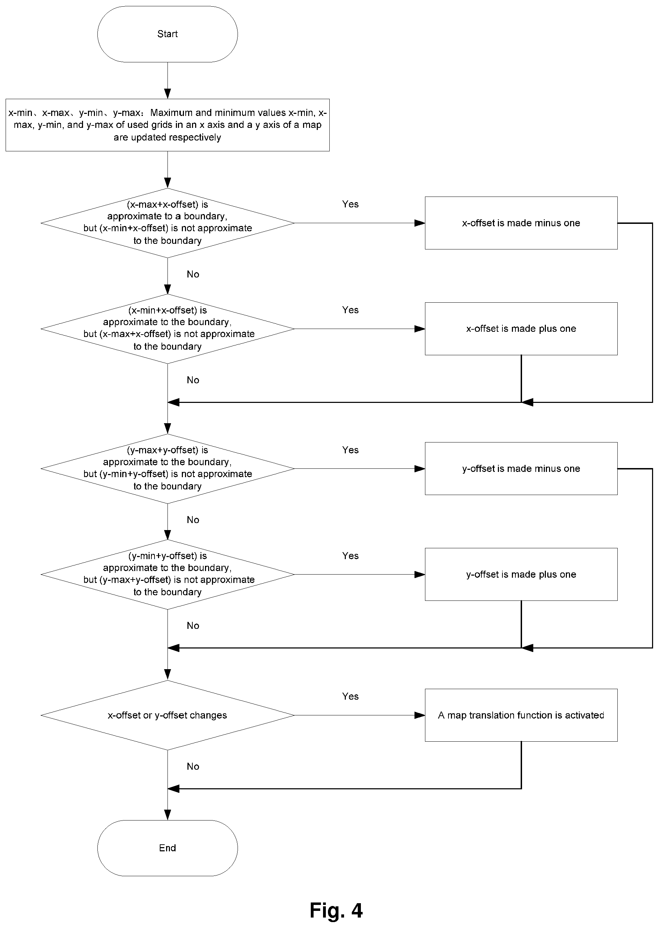

As shown in Fig. 4, x-min and x-max are minimum and maximum values of the used grid in the x-axis direction, y-min and y-max are minimum and maximum values of the used grid in the y-axis direction, and x-offset and y-offset record actual grid offsets in the x-axis and y-axis directions of the current grid map.

The method of step a in the map translation sub-process specifically includes the following steps.

At step a1, maximum and minimum values x-min, x-max, y-min, and y-max of the used grids in the x axis and the y axis of the grid map are updated respectively.

At step a2, it is determined whether (x-max+x-offset) is approximate to the boundary, but (x-min+x-offset) is not approximate to the boundary, when (x-max+x-offset) is approximate to the boundary but (x-min+x-offset) is not approximate to the boundary, x-offset is made minus one and the process proceeds to step a4, otherwise, the process proceeds to step a3.

At step a3, it is determined whether (x-min+x-offset) is approximate to the boundary, but (x-max+x-offset) is not approximate to the boundary, when (x-min+x-offset) is approximate to the boundary but (x-max+x-offset) is not approximate to the boundary, x-offset is made plus one and the process proceeds to step a4, otherwise, the process proceeds directly to step a4.

At step a4, it is determined whether (y-max+y-offset) is approximate to the boundary, but (y-min+y-offset) is not approximate to the boundary, when (y-max+y-offset) is approximate to the boundary but (y-min+y-offset) is not approximate to the boundary, y-offset is made minus one and the process proceeds to step a6, otherwise, the process proceeds to step a5.

At step a5, it is determined whether (y-min+y-offset) is approximate to the boundary, but (y-max+y-offset) is not approximate to the boundary, when (y-min+y-offset) is approximate to the boundary but (y-max+y-offset) is not approximate to the boundary, y-offset is made plus one and the process proceeds to step a6, otherwise, the process proceeds directly to step a6.

At step a6, it is determined whether x-offset or y-offset changes, when x-offset or y-offset changes, the translation of the entire grid map is started, otherwise, the sub-process is quit.

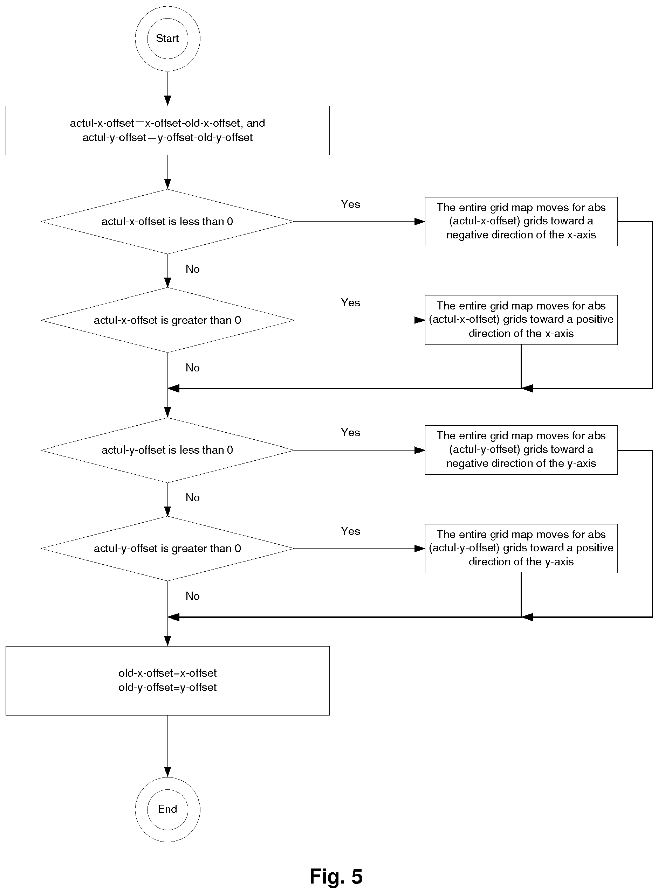

As shown in Fig. 5, x-offset and y-offset record the actual grid offsets in the x-axis and y-axis directions of the current grid map, old-x-offset and old-y-offset record the grid offsets in the x-axis and y-axis directions during the previous translation of the grid map, abs indicates an absolute value of this number, and actul-x-offset and actul-y-offset are the number of grids to be actually translated at this time.

The method of step b in the map translation sub-process includes the following steps.

At step b1, actul-x-offset = x-offset-old-x-offset, and actul-y-offset = y-offset-old-y-offset are set.

At step b2, it is determined whether actul-x-offset is less than 0, when actul-x-offset is less than 0, it is determined that the entire grid map moves for abs (actul-x-offset) grids toward a negative direction of the x-axis and the process proceeds to step b4, otherwise, the process proceeds to step b3.

At step b3, it is determined whether actul-x-offset is greater than 0, when actul-x-offset is greater than 0, it is determined that the entire grid map moves for abs (actul-x-offset) grids toward a positive direction of the x-axis and the process proceeds to step b4, otherwise, the process proceeds directly to step b4.

At step b4, it is determined whether actul-y-offset is less than 0, when actul-y-offset is less than 0, it is determined that the entire grid map moves for abs (actul-y-offset) grids toward a negative direction of the y-axis and the process proceeds to step b6, otherwise, the process proceeds to step b5.

At step b5, it is determined whether actul-y-offset is greater than 0, when actul-y-offset is greater than 0, it is determined that the entire grid map moves for abs (actul-y-offset) grids toward a positive direction of the y-axis and the process proceeds to step b6, otherwise, the process proceeds directly to step b6.

At step b6, the grid offsets old-x-offset and old-y-offset in the x-axis and y-axis directions during the previous translation of the grid map are updated with the actual grid offsets x-offset and y-offset in the x-axis and y-axis directions of the current grid map.

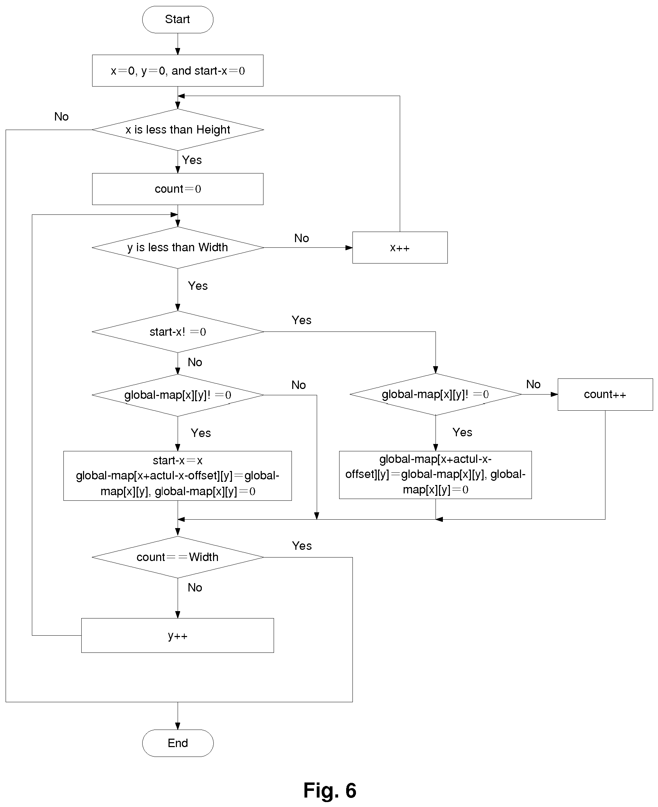

As shown in Fig. 6, global-map is a grid map array, Height and Width represent the height and width of the global-map grid array, start-x represents a row number of a first row with data not zero, that is, data from the beginning of the row needs to be translated, and count records how many grids in a row of data are zero (unused grids). If the entire row of grid data is zero, the translation operation ends.

The present embodiment is described by taking the translation of the x-axis to a negative direction as an example, that is, when the actul-x-offset is less than zero. When the entire grid map is translated, the unused grid (with zero data) does not need to be operated.

The method of step c in the map translation sub-process includes the following steps.

At step c1, x=0, y=0, and start-x=0 are set during starting.

At step c2, it is determined whether x is less than Height, when x is less than Height, the process proceeds to step c3, otherwise, the process ends.

At step c3, count=0 is set, and the process proceeds to step c4.

At step c4, it is determined whether y is less than Width, when y is less than Width, the process proceeds to step c5, otherwise, x++ is set and the process returns to step c2.

At step c5, it is determined whether start-x! =0, when start-x! =0, the process proceeds to step c51, otherwise, the process proceeds to step c6.

At step c51, it is determined whether global-map[x][y]! = 0, when global-map[x][y]! = 0, global-map[x+actul-x-offset][y] = global-map[x][y], global-map[x][y]=0 are set and the process proceeds to step c8, otherwise, count++ is set and the process proceeds to step c8.

At step c6, it is determined whether global-map[x][y]! =0, when global-map[x][y]! =0, the process proceeds to step c7, otherwise, the process proceeds to step c8.

At step c7, start-x = x, global-map[x+actul-x-offset][y] = global-map[x][y], global-map[x][y]=0 are set, and the process proceeds to step c8.

At step c8. it is determined whether count= =Width, when count= =Width, the process ends, otherwise, y++ is set and the process returns to step c4.

When actul-x-offset is greater than zero, in the above flow chart, it is to set an initial value of x to Height-1, after each cycle, x-- is executed, and the process ends until x<0.

The translation principle of the y-axis is the same as that of the x-axis.

In addition, when the translation function is activated, it is not suitable to translate the entire grid map immediately. It is best to wait for the prototype to stop when it is translated. Because the entire grid map is translated, it is very CPU-intensive and affects the smoothness of the sweeper movement.

In order to prevent the grid map from crossing the boundary during this waiting process, a small amount of memory must be opened as a buffer to store grid map data that has been out of bounds. When the entire grid map is translated, the buffered grid data is written to the grid map. Therefore, when reading or writing the grid map data, it is necessary to consider whether there is a buffer.

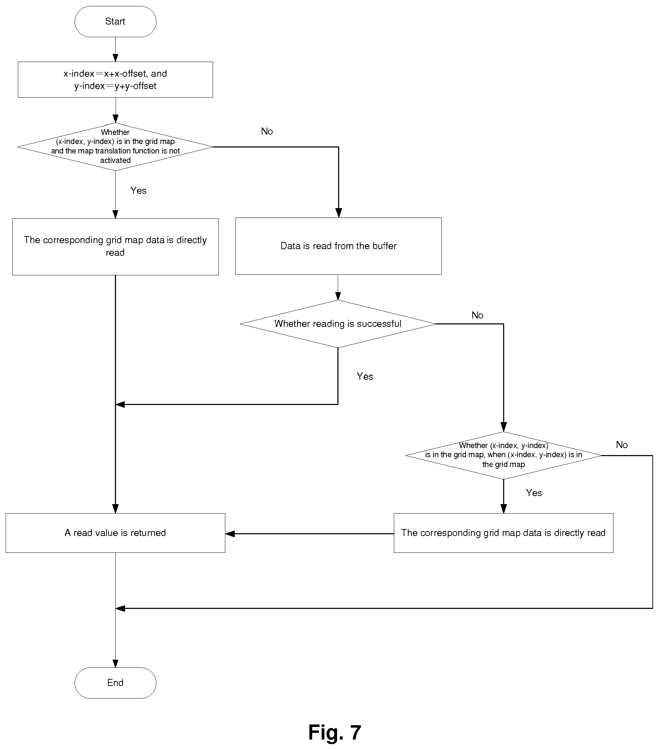

As shown in Fig. 7, the process of reading data in a corresponding buffer method provided by the present embodiment is as follows.

At step S1, x-index=x+x-offset, and y-index=y+y-offset are set.

At step S2, it is determined whether (x-index, y-index) is in the grid map and the map translation function is not activated, when (x-index, y-index) is in the grid map and the grid map translation function is not activated, the process proceeds to step S3, otherwise, the process proceeds to step S2a.

At step S2a, data is read from the buffer, and the process proceeds to step S2b.

At step S2b, it is determined whether reading is successful, when the reading is successful, the process proceeds to step S4, otherwise, the process proceeds to step S2c.

At step S2c, it is determined whether (x-index, y-index) is in the grid map, when (x-index, y-index) is in the grid map, the process proceeds to step S2d, otherwise, the process returns to zero and ends.

At step S2d, the corresponding grid map data is directly read and the process proceeds to step S4.

At step S3, the corresponding grid map data is directly read and the process proceeds to step S4.

At step S4, a read value is returned, and the process ends.

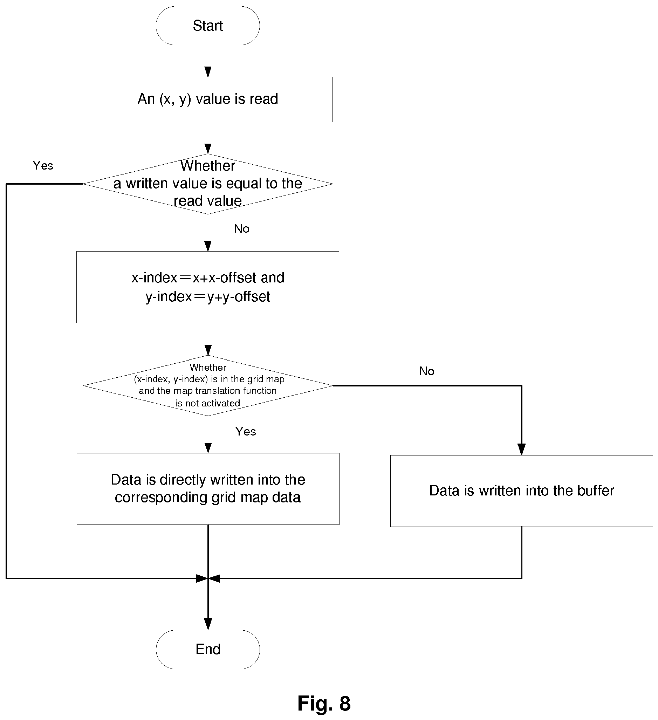

As shown in Fig. 8, the process of writing data in a corresponding buffer method provided by the present embodiment is as follows.

At step T1, an (x, y) value is read and the process proceeds to step T2.

At step T2, it is determined whether a written value is equal to the read value, when the written value is equal to the read value, the process ends, otherwise, x-index=x+x-offset and y-index=y+y-offset are set, and the process proceeds to step T3.

At step T3, it is determined whether (x-index, y-index) is in the grid map and the map translation function is not activated, when (x-index, y-index) is in the grid map and the grid map translation function is not activated, data is directly written into the corresponding grid map data and the process ends, otherwise, data is written into the buffer and the process ends.
x and y are the grid coordinates at which the intelligent robot is currently located, and x-index and y-index are the actual coordinates of the corresponding grid map.

The above embodiments are for the purpose of fully disclosing and not limiting the present invention, and the substitution of equivalent technical features based on the inventive subject matter and without creative labor should be regarded as the scope of the present invention.

## Claims

1. A method for creating a grid map of an intelligent robot, the intelligent robot comprising an action body (1), a main control component (4), a sensor set (5), a power component, and a regional operation component, the regional operation component is a component that performs certain functional operations on an area where the intelligent robot is located, the method for creating the grid map comprising:
step (1) controlling a motion of the intelligent robot;
step (2) detecting whether an action of the intelligent robot at a current position is an edgewise behavior and detecting whether there is at least one obstacle at the current position, when the action at the current position is the edgewise behavior but there is no obstacle at the current position, proceeding to step (3a), when the action at the current position is the edgewise behavior and there is at least one obstacle at the current position, proceeding to step (3b), when the action at the current position is not the edgewise behavior but there is at least one obstacle, proceeding to step (3c), and when the action at the current position is not the edgewise behavior and there is no obstacle, proceeding to step (3d);
step (3a) marking a grid at the current position on the grid map as an edgewise behavior point and returning to step (1);
step (3b) marking the grid at the current position on the grid map as the edgewise behavior point, calculating coordinates of a grid where the at least one obstacle is located and marking the grid corresponding to the at least one obstacle on the grid map as at least one obstacle point, and returning to step (1);
step (3c) marking the grid at the current position on the grid map as a normal passing point, calculating coordinates of a grid where the at least one obstacle is located and marking the corresponding grid as at least one obstacle point, and returning to step (1); and
step (3d) marking the grid at the current position on the grid map as a normal passing point and returning to step (1);
wherein at step (1), when each time the motion of the intelligent robot is controlled, a grid map translation sub-process is first executed, this sub-process comprising:
step a, detecting whether it is necessary to translate the entire grid map, wherein when a grid actually used in one direction of an x axis or a y axis of the grid map has reached a boundary of the entire grid map and the remaining grids are not used in an opposite direction of an x axis or a y axis of the grid map, proceeding to step b, and otherwise, quitting the sub-process;
step b, determining the number of grids to be actually translated at this time according to a difference between the number of previous offset grids of the x axis and the y axis and the number of current offset grids of the x axis and the y axis; and
step c, translating the entire grid map according to the number of grids to be actually translated at this time;
wherein the previous offset grids are the offsets in the x-axis and y-axis directions during the previous translation of the grid map, and the current offset grids are the offsets in the x-axis and y-axis directions of the current grid map.

2. The method for creating the grid map of the intelligent robot as claimed in claim 1, wherein in a process of creating the grid map, a grid of a starting point of the motion of the intelligent robot on the grid map is marked as the normal passing point.

3. The method for creating the grid map of the intelligent robot as claimed in claim 1, wherein each grid in the grid map is represented by a digital sequence, the digital sequence comprising: a digital segment indicating an area where each grid is located, a digital segment indicating whether the intelligent robot has reached each grid, a digital segment indicating whether each grid has at least one obstacle, and a digital segment indicating that the intelligent robot passes through each grid when the intelligent robot performing the edgewise behavior.

4. The method for creating the grid map of the intelligent robot as claimed in claim 3, wherein each grid is represented by an 8-bit number, the higher four bits of the 8-bit number record area information and indicate an area where each grid is located, the lower four bits of the 8-bit number are used for representing actual information of the grid map, wherein a Oth bit indicates whether the intelligent robot has reached each grid, a value 0 of the Oth bit indicates that the intelligent robot has not reached this grid, and a value 1 of the Oth bit indicates that the intelligent robot has not reached this grid; a 1st bit indicates whether each grid has at least one obstacle, a value 0 of the 1st bit indicates that this grid has no obstacle, and a value 1 of the 1st bit indicates that this grid has at least one obstacle; a 2nd bit indicates whether the intelligent robot passes through each grid when the intelligent robot performing the edgewise behavior, a value 1 of the 2nd bit indicates that the intelligent robot passes through this grid, and a value 0 of the 2nd bit indicates that the intelligent robot does not pass through this grid; and a 3rd bit is a reserved bit.

5. The method for creating the grid map of the intelligent robot as claimed in claim 1, wherein a method for calculating the coordinates of the grid where the at least one obstacle is located comprises:
step A, calculating a distance from each obstacle point of the at least one obstacle to a center point of the intelligent robot;
step B, calculating an actual angle between each obstacle point of the at least one obstacle and the center point of the intelligent robot;
step C, calling a trigonometric function to calculate coordinates of each obstacle point with respect to the center point of the intelligent robot; and
step D, adding calculated coordinates to coordinates of the center point of the intelligent robot to obtain the coordinates of the grid where the at least one obstacle is located.

6. The method for creating the grid map of the intelligent robot as claimed in claim 5, wherein the distance from each obstacle point of the at least one obstacle to the center point of the intelligent robot and the actual angle between each obstacle point of the at least one obstacle and the center point of the intelligent robot are calculated according to the following formula:
a distance from each obstacle point of the at least one obstacle to the center point of the intelligent robot is equal to a sum of a distance detected by a sensor and a radius of the intelligent robot; and
an angle between each obstacle point of the at least one obstacle and the center point of the intelligent robot is equal to a sum of a front angle of the intelligent robot and a difference of angle at which a position of the sensor deviates from the front of the intelligent robot.

7. The method for creating the grid map of the intelligent robot as claimed in claim 6, wherein the method of step a in the grid map translation sub-process comprises:
step a1, updating maximum and minimum values x-min, x-max, y-min, and y-max of used grids in the x axis and the y axis of the grid map respectively;
step a2, determining whether (x-max+x-offset) is approximate to the boundary, but (x-min+x-offset) is not approximate to the boundary, when (x-max+x-offset) is approximate to the boundary but (x-min+x-offset) is not approximate to the boundary, making x-offset minus one and proceeding to step a4, otherwise, proceeding to step a3;
step a3, determining whether (x-min+x-offset) is approximate to the boundary, but (x-max+x-offset) is not approximate to the boundary, when (x-min+x-offset) is approximate to the boundary but (x-max+x-offset) is not approximate to the boundary, making x-offset plus one and proceeding to step a4, otherwise, directly proceeding to step a4;
step a4, determining whether (y-max+y-offset) is approximate to the boundary, but (y-min+y-offset) is not approximate to the boundary, when (y-max+y-offset) is approximate to the boundary but (y-min+y-offset) is not approximate to the boundary, making y-offset minus one and proceeding to step a6, otherwise, proceeding to step a5;
step a5, determining whether (y-min+y-offset) is approximate to the boundary, but (y-max+y-offset) is not approximate to the boundary, when (y-min+y-offset) is approximate to the boundary but (y-max+y-offset) is not approximate to the boundary, making y-offset plus one and proceeding to step a6, otherwise, directly proceeding to step a6; and
step a6, determining whether x-offset or y-offset changes, when x-offset or y-offset changes, starting to translate the entire grid map, otherwise, quitting the sub-process,
wherein x-min and x-max are minimum and maximum values of the used grid in the x-axis direction, y-min and y-max are minimum and maximum values of the used grid in the y-axis direction, and x-offset and y-offset record actual grid offsets in the x-axis and y-axis directions of the current grid map.

8. The method for creating the grid map of the intelligent robot as claimed in claim 7, wherein the method of step b in the grid map translation sub-process comprises:
step b1, setting actul-x-offset = x-offset-old-x-offset, and actul-y-offset = y-offset-old-y-offset;
step b2, determining whether actul-x-offset is less than 0, when actul-x-offset is less than 0, determining that the entire grid map moves for abs (actul-x-offset) grids toward a negative direction of the x-axis and proceeding to step b4, otherwise, proceeding to step b3;
step b3, determining whether actul-x-offset is greater than 0, when actul-x-offset is greater than 0, determining that the entire grid map moves for abs (actul-x-offset) grids toward a positive direction of the x-axis and proceeding to step b4, otherwise, directly proceeding to step b4;
step b4, determining whether actul-y-offset is less than 0, when actul-y-offset is less than 0, determining that the entire grid map moves for abs (actul-y-offset) grids toward a negative direction of the y-axis and proceeding to step b6, otherwise, proceeding to step b5;
step b5, determining whether actul-y-offset is greater than 0, when actul-y-offset is greater than 0, determining that the entire grid map moves for abs (actul-y-offset) grids toward a positive direction of the y-axis and proceeding to step b6, otherwise, directly proceeding to step b6; and
step b6, updating the grid offsets old-x-offset and old-y-offset in the x-axis and y-axis directions during the previous translation of the grid map with the actual grid offsets x-offset and y-offset in the x-axis and y-axis directions of the current grid map,
wherein x-offset and y-offset record the actual grid offsets in the x-axis and y-axis directions of the current grid map, old-x-offset and old-y-offset record the grid offsets in the x-axis and y-axis directions during the previous translation of the grid map, abs indicates an absolute value of this number, and actul-x-offset and actul-y-offset are the number of grids to be actually translated at this time.

9. The method for creating the grid map of the intelligent robot as claimed in claim 8, wherein the method of translating the x-axis toward a negative direction when actul-x-offset is less than zero in step c in the grid map translation sub-process comprises:
step c1, setting x=0, y=0, and start-x=0 during starting;
step c2, determining whether x is less than Height, when x is less than Height, proceeding to step c3, otherwise, ending;
step c3, setting count=0, and proceeding to step c4;
step c4, determining whether y is less than Width, when y is less than Width, proceeding to step c5, otherwise, setting x++ and returning to step c2;
step c5, determining whether start-x! =0, when start-x! =0, proceeding to step c51, otherwise, proceeding to step c6;
step c51, determining whether global-map[x][y]! =0, when global-map[x][y]! =0, setting global-map[x+actul-x-offset][y] = global-map[x][y], global-map[x][y] = 0 and proceeding to step c8, otherwise, setting count++ and proceeding to step c8;
step c6, determining whether global-map[x][y]! =0, when global-map[x][y]! =0, proceeding to step c7, otherwise, proceeding to step c8;
step c7, setting start-x = x, global-map[x+actul-x-offset][y] = global-map[x][y], global-map[x][y]=0, and proceeding to step c8; and
step c8, determining whether count= =Width, when count= =Width, ending, otherwise, setting y++ and returning to step c4,
wherein global-map is a grid map array, Height and Width represent the height and width of the global-map grid array, start-x represents a row number of a first row with data not zero, that is, data from the beginning of the row is to be translated, and count records how many grids in a row of data are zero; and
when actul-x-offset is greater than zero, in the above flow chart, an initial value of x is set to Height-1, after each cycle, x-- is executed, and the process ends until x<0, the translation principle of the y-axis being the same as that of the x-axis.

10. The method for creating the grid map of the intelligent robot as claimed in claim 9, wherein when a translation function is activated, a small amount of memory is opened as a buffer to store grid map data that has been out of bounds, and when the entire grid map is translated, the buffered grid data is written to the grid map.

11. The method for creating the grid map of the intelligent robot as claimed in claim 10, wherein the process of reading data in a buffer process is as follows:
step S1, setting x-index=x+x-offset, and y-index=y+y-offset;
step S2, determining whether (x-index, y-index) is in the grid map and the grid map translation function is not activated, when (x-index, y-index) is in the grid map and the grid map translation function is not activated, proceeding to step S3, otherwise, proceeding to step S2a;
step S2a, reading from the buffer, and proceeding to step S2b;
step S2b, determining whether reading is successful, when the reading is successful, proceeding to step S4, otherwise, proceeding to step S2c;
step S2c, determining whether (x-index, y-index) is in the grid map, when (x-index, y-index) is in the grid map, proceeding to step S2d, otherwise, returning to zero and ending;
step S2d, directly reading the corresponding grid map data and proceeding to step S4;
step S3, directly reading the corresponding grid map data and proceeding to step S4; and
step S4, returning a read value and ending,
the process of writing data in the buffer process is as follows:
step T1, reading an (x, y) value and proceeding to step T2;
step T2, determining whether a written value is equal to the read value, when the written value is equal to the read value, ending, otherwise, setting x-index=x+x-offset and y-index=y+y-offset, and proceeding to step T3; and
step T3, determining whether (x-index, y-index) is in the grid map and the grid map translation function is not activated, when (x-index, y-index) is in the grid map and the grid map translation function is not activated, directly writing data into the corresponding grid map data and ending, otherwise, writing data into the buffer and ending,
wherein x and y are the grid coordinates at which the intelligent robot is currently located, and x-index and y-index are the actual coordinates of the corresponding grid map.

## Patentansprüche

1. Verfahren zur Erzeugung einer Koordinatennetzkarte eines intelligenten Roboters, wobei der intelligente Roboter einen Aktionskörper (1), eine Hauptsteuerungskomponente (4), einen Sensorsatz (5), eine Antriebskomponente und eine Regionalbetriebskomponente umfasst, wobei die Regionalbetriebskomponente eine Komponente ist, die bestimmte Funktionsoperationen in einem Bereich durchführt, in dem sich der intelligente Roboter befindet, wobei das Verfahren zur Erzeugung der Koordinatennetzkarte umfasst:
Schritt (1) des Steuerns einer Bewegung des intelligenten Roboters;
Schritt (2) des Erfassens, ob eine Aktion des intelligenten Roboters an einer aktuellen Position ein Kantenverhalten ist, und des Erfassens, ob an der aktuellen Position mindestens ein Hindernis vorhanden ist, wenn die Aktion an der aktuellen Position das Kantenverhalten ist, aber kein Hindernis an der aktuellen Position vorhanden ist, des Weitergehens zu Schritt (3a), wenn die Aktion an der aktuellen Position das Kantenverhalten ist und mindestens ein Hindernis an der aktuellen Position vorhanden ist, des Weitergehens zu Schritt (3b), wenn die Aktion an der aktuellen Position nicht das Kantenverhalten ist, aber mindestens ein Hindernis vorhanden ist, des Weitergehens zu Schritt (3c), und wenn die Aktion an der aktuellen Position nicht das Kantenverhalten ist und kein Hindernis vorhanden ist, des Weitergehens zu Schritt (3d);
Schritt (3a) des Markierens eines Koordinatennetzes an der aktuellen Position auf der Koordinatennetzkarte als Kantenverhaltenspunkt und des Zurückkehrens zu Schritt (1);
Schritt (3b) des Markierens des Koordinatennetzes an der aktuellen Position auf der Koordinatennetzkarte als den Kantenverhaltenspunkt, des Berechnens von Koordinaten eines Koordinatennetzes, an denen sich das mindestens eine Hindernis befindet, und des Markierens des Koordinatennetzes, das dem mindestens einen Hindernis entspricht, auf der Koordinatennetzkarte als mindestens einen Hindernispunkt, und des Zurückkehrens zu Schritt (1);
Schritt (3c) des Markierens des Koordinatennetzes an der aktuellen Position auf der Koordinatennetzkarte als normalen Passierpunkt, des Berechnens von Koordinaten eines Koordinatennetzes, an denen sich das mindestens eine Hindernis befindet, und des Markieren des entsprechenden Koordinatennetzes als mindestens einen Hindernispunkt und des Zurückkehrens zu Schritt (1); und
Schritt (3d) des Markierens des Koordinatennetzes an der aktuellen Position auf der Koordinatennetzkarte als normalen Passierpunkt und des Zurückkehrens zu Schritt (1);
wobei in Schritt (1) jedes Mal, wenn die Bewegung des intelligenten Roboters gesteuert wird, zuerst ein Teilprozess einer Verschiebung der Koordinatennetzkarte ausgeführt wird, wobei dieser Teilprozess umfasst:
Schritt a des Erfassens, ob es notwendig ist, die gesamte Koordinatennetzkarte zu verschieben, wobei, wenn ein tatsächlich in einer Richtung einer x-Achse oder y-Achse der Koordinatennetzkarte verwendetes Koordinatennetz eine Grenze der gesamten Koordinatennetzkarte erreicht hat und die verbleibenden Koordinatennetze nicht in einer entgegengesetzten Richtung einer x-Achse oder einer y-Achse der Koordinatennetzkarte verwendet werden, des Weitergehens zu Schritt b und anderenfalls des Beendens des Teilprozesses;
Schritt b des Ermittelns der Anzahl von Koordinatennetzen, die zu diesem Zeitpunkt tatsächlich zu verschieben sind, gemäß einer Differenz zwischen der Anzahl vorheriger versetzter Koordinatennetze der x-Achse und der y-Achse und der Anzahl aktueller versetzter Koordinatennetze der x-Achse und der y-Achse; und
Schritt c des Verschiebens der gesamten Koordinatennetzkarte gemäß der Anzahl von Koordinatennetzen, die zu diesem Zeitpunkt tatsächlich zu verschieben sind;
wobei die vorherigen versetzten Koordinatennetze die Versätze in der x-Achsen- und y-Achsenrichtung während der vorherigen Verschiebung der Koordinatennetzkarte sind und die aktuellen versetzten Koordinatennetze die Versätze in der x-Achsen- und y-Achsenrichtung der aktuellen Koordinatennetzkarte sind.

2. Verfahren zur Erzeugung der Koordinatennetzkarte des intelligenten Roboters nach Anspruch 1, wobei in einem Prozess zur Erzeugung der Koordinatennetzkarte ein Koordinatennetz eines Startpunkts der Bewegung des intelligenten Roboters auf der Koordinatennetzkarte als normaler Passierpunkt markiert wird.

3. Verfahren zur Erzeugung der Koordinatennetzkarte des intelligenten Roboters nach Anspruch 1, wobei jedes Koordinatennetz in der Koordinatennetzkarte durch eine digitale Sequenz dargestellt wird, wobei die digitale Sequenz umfasst: ein digitales Segment, das einen Bereich angibt, in dem sich jedes Koordinatennetz befindet, ein digitales Segment, das angibt, ob der intelligente Roboter jedes Koordinatennetz erreicht hat, ein digitales Segment, das angibt, ob jedes Koordinatennetz mindestens ein Hindernis aufweist, und ein digitales Segment, das angibt, dass der intelligente Roboter jedes Koordinatennetz passiert, wenn der intelligente Roboter das Kantenverhalten durchführt.

4. Verfahren zur Erzeugung der Koordinatennetzkarte des intelligenten Roboters nach Anspruch 3, wobei jedes Koordinatennetz durch eine 8-Bit-Zahl dargestellt wird, wobei die oberen vier Bits der 8-Bit-Zahl Bereichsinformationen aufzeichnen und einen Bereich angeben, in dem sich jedes Koordinatennetz befindet, die unteren vier Bits der 8-Bit-Zahl zum Darstellen von Ist-Informationen der Koordinatennetzkarte verwendet werden, wobei ein 0-tes Bit angibt, ob der intelligente Roboter jedes Koordinatennetz erreicht hat, ein Wert 0 des 0-ten Bits angibt, dass der intelligente Roboter dieses Koordinatennetz nicht erreicht hat, und ein Wert 1 des 0-ten Bits angibt, dass der intelligente Roboter dieses Koordinatennetz nicht erreicht hat; ein 1. Bit angibt, ob jedes Koordinatennetz mindestens ein Hindernis aufweist, ein Wert 0 des 1. Bit angibt, dass dieses Koordinatennetz kein Hindernis aufweist, und ein Wert 1 des 1. Bit angibt, dass dieses Koordinatennetz mindestens ein Hindernis aufweist; ein 2. Bit angibt, ob der intelligente Roboter jedes Koordinatennetz passiert, wenn der intelligente Roboter das Kantenverhalten durchführt, ein Wert 1 des 2. Bits angibt, dass der intelligente Roboter dieses Koordinatennetz passiert, und ein Wert 0 des 2. Bits angibt, dass der intelligente Roboter dieses Koordinatennetz nicht passiert; und ein 3. Bit ein reserviertes Bit ist.

5. Verfahren zur Erzeugung der Koordinatennetzkarte des intelligenten Roboters nach Anspruch 1, wobei ein Verfahren zur Berechnung der Koordinaten des Koordinatennetzes, in dem sich das mindestens eine Hindernis befindet, umfasst:
Schritt A des Berechnens eines Abstands von jedem Hindernispunkt des mindestens einen Hindernisses zu einem Mittelpunkt des intelligenten Roboters;
Schritt B des Berechnens eines Ist-Winkels zwischen jedem Hindernispunkt des mindestens einen Hindernisses und dem Mittelpunkt des intelligenten Roboters;
Schritt C des Aufrufens einer trigonometrischen Funktion zum Berechnen von Koordinaten jedes Hindernispunkts in Bezug auf den Mittelpunkt des intelligenten Roboters; und
Schritt D des Addierens berechneter Koordinaten zu Koordinaten des Mittelpunkts des intelligenten Roboters, um die Koordinaten des Koordinatennetzes zu erhalten, an denen sich das mindestens eine Hindernis befindet.

6. Verfahren zur Erzeugung der Koordinatennetzkarte des intelligenten Roboters nach Anspruch 5, wobei der Abstand von jedem Hindernispunkt des mindestens einen Hindernisses zu dem Mittelpunkt des intelligenten Roboters und der Ist-Winkel zwischen jedem Hindernispunkt des mindestens einen Hindernisses und dem Mittelpunkt des intelligenten Roboters nach folgender Formel berechnet werden:
ein Abstand von jedem Hindernispunkt des mindestens einen Hindernisses zu dem Mittelpunkt des intelligenten Roboters ist gleich einer Summe aus einem durch einen Sensor erfassten Abstand und einem Radius des intelligenten Roboters; und
ein Winkel zwischen jedem Hindernispunkt des mindestens einen Hindernisses und dem Mittelpunkt des intelligenten Roboters ist gleich einer Summe aus einem Vorderseitenwinkel des intelligenten Roboters und einer Winkeldifferenz, um die eine Position des Sensors von der Vorderseite des intelligenten Roboters abweicht.

7. Verfahren zur Erzeugung der Koordinatennetzkarte des intelligenten Roboters nach Anspruch 6, wobei das Verfahren von Schritt a in dem Teilprozess der Koordinatennetzkartenverschiebung umfasst:
Schritt a1 des Aktualisierens der Maximum- und Minimumwerte x-min, x-max, y-min und y-max von verwendeten Koordinatennetzen auf der x-Achse bzw. der y-Achse der Koordinatennetzkarte;
Schritt a2 des Ermittelns, ob (x-max + x-Versatz) nahe der Grenze liegt, aber (x-min + x-Versatz) nicht nahe der Grenze liegt, wenn (x-max + x-Versatz) nahe der Grenze liegt, aber (x-min + x-Versatz) nicht nahe der Grenze liegt, des Setzens von x-Versatz auf minus eins und des Weitergehens zu Schritt a4, anderenfalls des Weitergehens zu Schritt a3;
Schritt a3 des Ermittelns, ob (x-min + x-Versatz) nahe der Grenze liegt, aber (x-max + x-Versatz) nicht nahe der Grenze liegt, wenn (x-min + x-Versatz) nahe der Grenze liegt, aber (x-max + x-Versatz) nicht nahe der Grenze liegt, des Setzens von x-Versatz auf plus eins und des Weitergehens zu Schritt a4, anderenfalls des direkten Weitergehens zu Schritt a4;
Schritt a4 des Ermittelns, ob (y-max + y-Versatz) nahe der Grenze liegt, aber (y-min + y-Versatz) nicht nahe der Grenze liegt, wenn (y-max + y-Versatz) nahe der Grenze liegt, aber (y-min + y-Versatz) nicht nahe der Grenze liegt, des Setzens von y-Versatz auf minus eins und des Weitergehens zu Schritt a6, anderenfalls des Weitergehens zu Schritt a5;
Schritt a5 des Ermittelns, ob (y-min + y-Versatz) nahe der Grenze liegt, aber (y-max + x-Versatz) nicht nahe der Grenze liegt, wenn (y-min + y-Versatz) nahe der Grenze liegt, aber (y-max + x-Versatz) nicht nahe der Grenze liegt, des Setzens von y-Versatz auf plus eins und des Weitergehens zu Schritt a6, anderenfalls des direkten Weitergehens zu Schritt a6; und
Schritt a6 des Ermittelns, ob sich x-Versatz oder y-Versatz ändert, wenn sich x-Versatz oder y-Versatz ändert, des Beginnens des Verschiebens der gesamten Koordinatennetzkarte, anderenfalls des Verlassens des Teilprozesses,
wobei x-min und x-max Minimum- und Maximumwert des verwendeten Koordinatennetzes in der x-Achsenrichtung sind, y-min und y-max Minimum- und Maximumwert des verwendeten Koordinatennetzes in der y-Achsenrichtung sind und x-Versatz und y-Versatz Ist-Koordinatennetzversätze in der x-Achsen- und der y-Achsenrichtung der aktuellen Koordinatennetzkarte aufzeichnen.

8. Verfahren zur Erzeugung der Koordinatennetzkarte des intelligenten Roboters nach Anspruch 7, wobei das Verfahren von Schritt b in dem Teilprozess der Koordinatennetzkartenverschiebung umfasst:
Schritt b1 des Setzens von Ist-x-Versatz = x-Versatz - Alter-x-Versatz und von Ist-y-Versatz = y-Versatz - Alter-y-Versatz;
Schritt b2 des Ermittelns, ob Ist-x-Versatz kleiner als 0 ist, wenn Ist-x-Versatz kleiner als 0 ist, des Ermittelns, dass sich die gesamte Koordinatennetzkarte um abs(Ist-x-Versatz) Koordinatennetze in eine negative Richtung der xAchse bewegt, und des Weitergehens zu Schritt b4, anderenfalls des Weitergehens zu Schritt b3;
Schritt b3 des Ermittelns, ob Ist-x-Versatz größer als 0 ist, wenn Ist-x-Versatz größer als 0 ist, des Ermittelns, dass sich die gesamte Koordinatennetzkarte um abs(Ist-x-Versatz) Koordinatennetze in eine positive Richtung der x-Achse bewegt, und des Weitergehens zu Schritt b4, anderenfalls des direkten Weitergehens zu Schritt b4;
Schritt b4 des Ermittelns, ob Ist-y-Versatz kleiner als 0 ist, wenn Ist-y-Versatz kleiner als 0 ist, des Ermittelns, dass sich die gesamte Koordinatennetzkarte um abs(Ist-y-Versatz) Koordinatennetze in eine negative Richtung der y-Achse bewegt, und des Weitergehens zu Schritt b6, anderenfalls des Weitergehens zu Schritt b5;
Schritt b5 des Ermittelns, ob Ist-y-Versatz größer als 0 ist, wenn Ist-y-Versatz größer als 0 ist, des Ermittelns, dass sich die gesamte Koordinatennetzkarte um abs(Ist-y-Versatz) Koordinatennetze in eine positive Richtung der y-Achse bewegt, und des Weitergehens zu Schritt b6, anderenfalls des direkten Weitergehens zu Schritt b6; und
Schritt b6 des Aktualisierens der Koordinatennetzversätze Alter-x-Versatz und Alter-y-Versatz in der x-Achsen- und y-Achsenrichtung während der vorherigen Verschiebung der Koordinatennetzkarte mit den Ist-Koordinatennetzversätzen x-Versatz und y-Versatz in der x-Achsen- und y-Achsenrichtung der aktuellen Koordinatennetzkarte,
wobei x-Versatz und y-Versatz die Ist-Koordinatennetzversätze in der x-Achsen- und y-Achsenrichtung der aktuellen Koordinatennetzkarte aufzeichnen, Alter-x-Versatz und Alter-y-Versatz die Koordinatennetzversätze in der x-Achsen- und y-Achsenrichtung während der vorherigen Verschiebung der Koordinatennetzkarte aufzeichnen, abs einen Absolutwert dieser Zahl angibt und Ist-x-Versatz und Ist-y-Versatz die Anzahl von Koordinatennetzen sind, die zu diesem Zeitpunkt tatsächlich zu verschieben sind.

9. Verfahren zur Erzeugung der Koordinatennetzkarte des intelligenten Roboters nach Anspruch 8, wobei das Verfahren zur Verschiebung der x-Achse in eine negative Richtung, wenn Ist-x-Versatz in Schritt c kleiner als null ist, in dem Teilprozess zur Verschiebung von Koordinatennetzkarten umfasst:
Schritt c1 des Setzens von x = 0, y = 0 und des Startens von x = 0 während des Startens;
Schritt c2 des Ermittelns, ob x kleiner als Höhe ist, wenn x kleiner als Höhe ist, des Weitergehens zu Schritt c3, anderenfalls des Beendens;
Schritt c3 des Setzens eines Zählwerts = 0 und des Weitergehens zu Schritt c4;
Schritt c4 des Ermittelns, ob y kleiner als Breite ist, wenn y kleiner als Breite ist, des Weitergehens zu Schritt c5, anderenfalls des Setzens von x++ und des Zurückkehrens zu Schritt c2;
Schritt c5 des Ermittelns, ob Start-x! = 0, wenn Start-x! = 0, des Weitergehens zu Schritt c51, anderenfalls des Weitergehens zu Schritt c6;
Schritt c51 des Ermittelns, ob Globale-Karte[x][y]! = 0, wenn Globale-Karte[x][y]! = 0, des Setzens von Globale-Karte[x + Ist-x-Versatz] [y] = Globale-Karte[x] [y], Globale-Karte[x][y] = 0 und des Weitergehens zu Schritt c8, anderenfalls des Setzens von Zählwert++ und des Weitergehens zu Schritt c8;
Schritt c6 des Ermittelns, ob Globale-Karte[x] [y] ! = 0, wenn Globale-Karte[x] [y] ! = 0, des Weitergehens zu Schritt c7, anderenfalls des Weitergehens zu Schritt c8;
Schritt c7 des Setzens von Start-x = x, von Globale-Karte[x + Ist-x-Versatz][y] = Globale-Karte[x][y], Globale-Karte[x][y] = 0 und des Weitergehens zu Schritt c8; und
Schritt c8 des Ermittelns, ob Zählwert = = Breite, wenn Zählwert = = Breite, des Beendens, anderenfalls des Setzens von y++ und des Zurückkehrens zu Schritt c4,
wobei Globale-Karte eine Koordinatennetzkartenanordnung ist, Höhe und Breite die Höhe und Breite der Global-Karte-Koordinatennetzanordnung darstellen, Start-x eine Zeilennummer einer ersten Zeile mit Daten ungleich null darstellt, das heißt, Daten vom Anfang der Zeile zu verschieben sein müssen, und Zählwert aufzeichnet, wie viele Koordinatennetze in einer Datenzeile null sind; und
wenn Ist-x-Versatz größer als null ist, wird im vorstehenden Flussdiagramm ein Anfangswert von x auf Höhe-1 gesetzt, nach jedem Zyklus wird x-- ausgeführt und der Prozess endet, bis x < 0, wobei das Verschiebungsprinzip der y-Achse das gleiche wie das der x-Achse ist.

10. Verfahren zur Erzeugung der Koordinatennetzkarte des intelligenten Roboters nach Anspruch 9, wobei, wenn eine Verschiebungsfunktion aktiviert ist, eine kleine Speichermenge als Puffer geöffnet wird, um Koordinatennetzkartendaten zu speichern, die außerhalb von Grenzen liegen, und wenn die gesamte Koordinatennetzkarte verschoben wird, die gepufferten Koordinatennetzdaten in die Koordinatennetzkarte geschrieben werden.

11. Verfahren zur Erzeugung der Koordinatennetzkarte des intelligenten Roboters nach Anspruch 10, wobei der Prozess des Lesens von Daten in einem Pufferprozess Folgender ist:
Schritt S1 des Setzens von x-Index = x + x-Versatz und von y-Index = y + y-Versatz;
Schritt S2 des Ermittelns, ob (x-Index, y-Index) in der Koordinatennetzkarte liegt und die Funktion zur Verschiebung von Koordinatennetzkarten nicht aktiviert ist, wenn (x-Index, y-Index) in der Koordinatennetzkarte liegt und die Funktion zur Verschiebung von Koordinatennetzkarten nicht aktiviert ist, des Weitergehens zu Schritt S3, anderenfalls des Weitergehens zu Schritt S2a;
Schritt S2a des Lesens aus dem Puffer und des Weitergehens zu Schritt S2b;
Schritt S2b des Ermittelns, ob das Lesen erfolgreich war, wenn das Lesen erfolgreich war, des Weitergehens zu Schritt S4, anderenfalls des Weitergehens zu Schritt S2c;
Schritt S2c des Ermittelns, ob (x-Index, y-Index) in der Koordinatennetzkarte liegt, wenn (x-Index, y-Index) in der Koordinatennetzkarte liegt, des Weitergehens zu Schritt S2d, anderenfalls des Zurückkehrens zu null und des Beendens;
Schritt S2d des direkten Lesens der entsprechenden Koordinatennetzkartendaten und des Weitergehens zu Schritt S4;
Schritt S3 des direkten Lesens der entsprechenden Koordinatennetzkartendaten und des Weitergehens zu Schritt S4; und
Schritt S4 des Zurückgebens eines gelesenen Werts und des Beendens,
wobei der Prozess des Schreibens von Daten in den Pufferprozess Folgender ist:
Schritt T1 des Lesens eines (x, y)-Werts und des Weitergehens zu Schritt T2;
Schritt T2 des Ermittelns, ob ein geschriebener Wert gleich dem gelesenen Wert ist, wenn der geschriebene Wert gleich dem gelesenen Wert ist, des Beendens, anderenfalls des Setzens von x-Index = x + x-Versatz und y-Index = y + y-Versatz und des Weitergehens zu Schritt T3; und
Schritt T3 des Ermittelns, ob (x-Index, y-Index) in der Koordinatennetzkarte liegt und die Funktion zur Verschiebung von Koordinatennetzkarten nicht aktiviert ist, wenn (x-Index, y-Index) in der Koordinatennetzkarte liegt und die Funktion zur Verschiebung von Koordinatennetzkarten nicht aktiviert ist, des direkten Schreibens von Daten in die entsprechenden Koordinatennetzkartendaten und des Beendens, anderenfalls des Schreibens von Daten in den Puffer und des Beendens,
wobei x und y die Koordinatennetzkoordinaten sind, an denen sich der intelligente Roboter gerade befindet, und x-Index und y-Index die Ist-Koordinaten der entsprechenden Koordinatennetzkarte sind.

## Revendications

1. Procédé de création d'une carte à quadrillage d'un robot intelligent, le robot intelligent comprenant un corps d'action (1), un composant de commande principal (4), un ensemble de capteurs (5), un composant de puissance et un composant d'opération régional, le composant d'opération régional étant un composant qui effectue certaines opérations fonctionnelles sur une zone où se trouve le robot intelligent, le procédé de création de la carte à quadrillage comprenant :
étape (1) la commande d'un mouvement du robot intelligent ;
étape (2) la détection pour savoir si une action du robot intelligent à une position actuelle est un comportement sur le côté et la détection pour savoir s'il existe au moins un obstacle à la position actuelle, lorsque l'action à la position actuelle est un comportement sur le côté mais qu'il n'y a pas d'obstacle à la position actuelle, le passage à l'étape (3a), lorsque l'action à la position actuelle est le comportement sur le côté et qu'il y a au moins un obstacle à la position actuelle, le passage à l'étape (3b), lorsque l'action à la position actuelle n'est pas le comportement sur le côté mais qu'il y a au moins un obstacle, le passage à l'étape (3c) et, lorsque l'action à la position actuelle n'est pas le comportement sur le côté et qu'il n'y a pas d'obstacle, le passage à l'étape (3d) ;
étape (3a) le marquage d'un quadrillage à la position actuelle sur la carte à quadrillage en tant que point de comportement sur le côté et le retour à l'étape (1) ;
étape (3b) le marquage du quadrillage à la position actuelle sur la carte à quadrillage en tant que point de comportement sur le côté, le calcul des coordonnées d'un quadrillage où le au moins un obstacle est situé et le marquage du quadrillage correspondant à l'au moins un obstacle sur la carte à quadrillage en tant qu'au moins un point d'obstacle et le retour à l'étape (1) ;
étape (3c) le marquage du quadrillage à la position actuelle sur la carte à quadrillage en tant que point de passage normal, le calcul des coordonnées d'un quadrillage où le au moins un obstacle est situé et le marquage du quadrillage correspondant en tant qu'au moins un point d'obstacle et le retour à l'étape (1) ; et
étape (3d) le marquage du quadrillage à la position actuelle sur la carte à quadrillage en tant que point de passage normal et le retour à l'étape (1) ;
dans lequel, à l'étape (1), à chaque fois que le mouvement du robot intelligent est commandé, un sous-processus de translation de carte à quadrillage est d'abord exécuté, ce sous-processus comprenant :
étape a, la détection pour savoir s'il est nécessaire de translater la carte à quadrillage entière, dans lequel, lorsqu'un quadrillage réellement utilisé dans une direction d'un axe x ou d'un axe y de la carte à quadrillage a atteint une limite de la carte à quadrillage entière et que les quadrillages restants ne sont pas utilisés dans une direction opposée d'un axe x ou d'un axe y de la carte à quadrillage, le passage à l'étape b et, sinon, la fin du sous-processus ;
étape b, la détermination du nombre de quadrillages à effectivement translater à cet instant en fonction d'une différence entre le nombre de quadrillages décalés précédents d'axe x et d'axe y et le nombre de quadrillages décalés actuels d'axe x et d'axe y ; et
étape c, la translation de la carte à quadrillage entière en fonction du nombre de quadrillages à effectivement translater à cet instant ;
dans lequel les quadrillages décalés précédents sont les décalages dans les directions d'axe x et d'axe y lors de la translation précédente de la carte à quadrillage et les quadrillages décalés actuels sont les décalages dans les directions d'axe x et d'axe y de la carte à quadrillage actuelle.

2. Procédé de création de la carte à quadrillage du robot intelligent selon la revendication 1, dans lequel, dans un processus de création de la carte à quadrillage, un quadrillage d'un point de départ du mouvement du robot intelligent sur la carte à quadrillage est marqué comme le point de passage normal.

3. Procédé de création de la carte à quadrillage du robot intelligent selon la revendication 1, dans lequel chaque quadrillage de la carte à quadrillage est représenté par une séquence numérique, la séquence numérique comprenant : un segment numérique indiquant une zone où se trouve chaque quadrillage, un segment numérique indiquant si le robot intelligent a atteint chaque quadrillage, un segment numérique indiquant si chaque quadrillage a au moins un obstacle et un segment numérique indiquant que le robot intelligent traverse chaque quadrillage lorsque le robot intelligent exécute le comportement sur le côté.

4. Procédé de création de la carte à quadrillage du robot intelligent selon la revendication 3, dans lequel chaque quadrillage est représenté par un nombre à 8 bits, les quatre bits supérieurs du nombre à 8 bits enregistrent des informations de zone et indiquent une zone où chaque quadrillage est situé, les quatre bits inférieurs du nombre à 8 bits sont utilisés pour représenter des informations réelles de la carte à quadrillage, dans lequel un 0ème bit indique si le robot intelligent a atteint chaque quadrillage, une valeur 0 du 0ème bit indique que le robot intelligent n'a pas atteint ce quadrillage et une valeur 1 du 0ème bit indique que le robot intelligent n'a pas atteint ce quadrillage ; un 1er bit indique si chaque quadrillage comporte au moins un obstacle, une valeur 0 du 1er bit indique que ce quadrillage ne comporte pas d'obstacle et une valeur 1 du 1er bit indique que ce quadrillage comporte au moins un obstacle ; un 2ème bit indique si le robot intelligent traverse chaque quadrillage lorsque le robot intelligent effectue le comportement sur le côté, une valeur 1 du 2ème bit indique que le robot intelligent traverse ce quadrillage et une valeur 0 du 2ème bit indique que le robot intelligent ne traverse pas ce quadrillage ; et un 3ème bit est un bit réservé.

5. Procédé de création de la carte à quadrillage du robot intelligent selon la revendication 1, dans lequel un procédé de calcul des coordonnées du quadrillage où se situe le au moins un obstacle comprend :
étape A, le calcul d'une distance entre chaque point d'obstacle du au moins un obstacle et un point central du robot intelligent ;
étape B, le calcul d'un angle réel entre chaque point d'obstacle du au moins un obstacle et le point central du robot intelligent ;
étape C, l'appel d'une fonction trigonométrique pour calculer les coordonnées de chaque point d'obstacle par rapport au point central du robot intelligent ; et
étape D, l'ajout de coordonnées calculées aux coordonnées du point central du robot intelligent pour obtenir les coordonnées du quadrillage où se trouve le au moins un obstacle.

6. Procédé de création de la carte à quadrillage du robot intelligent selon la revendication 5, dans lequel la distance entre chaque point d'obstacle du au moins un obstacle et le point central du robot intelligent et l'angle réel entre chaque point d'obstacle du au moins un obstacle et le point central du robot intelligent sont calculés selon la formule suivante :
une distance entre chaque point d'obstacle du au moins un obstacle et le point central du robot intelligent est égale à une somme d'une distance détectée par un capteur et d'un rayon du robot intelligent ; et
un angle entre chaque point d'obstacle du au moins un obstacle et le point central du robot intelligent est égal à une somme d'un angle avant du robot intelligent et d'une différence d'angle à laquelle une position du capteur s'écarte de l'avant du robot intelligent.

7. Procédé de création de la carte à quadrillage du robot intelligent selon la revendication 6, dans lequel le procédé de l'étape a dans le sous-processus de translation de carte à quadrillage comprend :
étape a1, la mise à jour des valeurs maximale et minimale x-min, x-max, y-min et y-max des quadrillages respectivement utilisés dans l'axe x et l'axe y de la carte à quadrillage ;
étape a2, la détermination pour savoir si (x-max+x-offset) est approximatif de la frontière, mais (x-min+x-offset) n'est pas approximatif de la frontière, lorsque (x-max+x-offset) est approximatif de la frontière mais (x-min+x-offset) n'est pas approximatif de la frontière, la réalisation de x-offset moins un et le passage à l'étape a4, sinon, le passage à l'étape a3 ;
étape a3, la détermination pour savoir si (x-min+x-offset) est approximatif de la frontière, mais (x-max+x-offset) n'est pas approximatif de la frontière, lorsque (x-min+x-offset) est approximatif de la frontière mais (x-max+x-offset) n'est pas approximatif de la frontière, la réalisation de x-offset plus un et le passage à l'étape a4, sinon, le passage direct à l'étape a4 ;
étape a4, la détermination pour savoir si (y-max+y-offset) est approximatif de la frontière, mais (y-min+y-offset) n'est pas approximatif de la frontière, lorsque (y-max+y-offset) est approximatif de la frontière mais (y-min+y-offset) n'est pas approximatif de la frontière, la réalisation de y-offset moins un et le passage à l'étape a6, sinon, le passage à l'étape a5 ;
étape a5, la détermination pour savoir si (y-min+y-offset) est approximatif de la frontière, mais (y-max+y-offset) n'est pas approximatif de la frontière, lorsque (y-min+y-offset) est approximatif de la frontière mais (y-max+y-offset) n'est pas approximatif de la frontière, la réalisation de y-offset plus un et le passage à l'étape a6, sinon, le passage direct à l'étape a6 ; et
étape a6, la détermination pour savoir si x-offset ou y-offset change, lorsque x-offset ou y-offset change, le lancement de la translation de la carte à quadrillage entière, sinon, la fin du sous-processus,
dans lequel x-min et x-max sont des valeurs minimales et maximales du quadrillage utilisé dans la direction de l'axe x, y-min et y-max sont des valeurs minimales et maximales du quadrillage utilisé dans la direction de l'axe y et x-offset et y-offset enregistrent des décalages de quadrillage réels dans les directions des axes x et y de la carte à quadrillage actuelle.

8. Procédé de création de la carte à quadrillage du robot intelligent selon la revendication 7, dans lequel le procédé de l'étape b du sous-processus de translation de carte à quadrillage comprend :
étape b1, le réglage de actul-x-offset = x-offset-old-x-offset et actul-y-offset = y-offset-old-y-offset ;
étape b2, la détermination pour savoir si actul-x-offset est inférieur à 0, lorsque actul-x-offset est inférieur à 0, la détermination que la carte à quadrillage entière se déplace pour les quadrillages abs (actul-x-offset) vers une direction négative de l'axe x et le passage à l'étape b4, sinon, le passage à l'étape b3 ;
étape b3, la détermination pour savoir si actul-x-offset est supérieur à 0, lorsque actul-x-offset est supérieur à 0, la détermination que la carte à quadrillage entière se déplace pour les quadrillages abs (actul-x-offset) vers une direction positive de l'axe x et le passage à l'étape b4, sinon, le passage direct à l'étape b4 ;
étape b4, la détermination pour savoir si actul-y-offset est inférieur à 0, lorsque actul-y-offset est inférieur à 0, la détermination que la carte à quadrillage entière se déplace pour les quadrillages abs (actul-y-offset) vers une direction négative de l'axe y et le passage à l'étape b6, sinon, le passage à l'étape b5 ;
étape b5, la détermination pour savoir si actul-y-offset est supérieur à 0, lorsque actul-y-offset est supérieur à 0, la détermination que la carte à quadrillage entière se déplace pour les quadrillages abs (actul-y-offset) vers une direction positive de l'axe y et le passage à l'étape b6, sinon, le passage direct à l'étape b6 ; et
étape b6, la mise à jour des décalages de quadrillage old-x-offset et old-y-offset dans les directions de l'axe x et de l'axe y pendant la translation précédente de la carte à quadrillage avec les décalages de quadrillage réels x-offset et y-offset dans les directions des axes x et y de la carte à quadrillage actuelle,
dans lequel x-offset et y-offset enregistrent les décalages de quadrillage réels dans les directions des axes x et y de la carte à quadrillage actuelle, old-x-offset et old-y-offset enregistrent les décalages de quadrillage dans les directions de l'axe x et de l'axe y lors de la translation précédente de la carte à quadrillage, abs indique une valeur absolue de ce nombre et actul-x-offset et actul-y-offset sont le nombre de quadrillages à translater réellement à cet instant.

9. Procédé de création de la carte à quadrillage du robot intelligent selon la revendication 8, dans lequel le procédé de translation de l'axe x vers une direction négative lorsque actul-x-offset est inférieur à zéro à l'étape c dans le sous-processus de translation de carte à quadrillage comprend :
étape c1, le réglage de x=0, y=0 et start-x=0 lors du démarrage ;
étape c2, la détermination pour savoir si x est inférieur à la hauteur (Height), lorsque x est inférieur à Height, le passage à l'étape c3, sinon, l'arrêt ;
étape c3, le réglage de count=0 et le passage à l'étape c4 ;
étape c4, la détermination pour savoir si y est inférieur à la largeur (Width), lorsque y est inférieur à Width, le passage à l'étape c5, sinon, le réglage de x++ et le retour à l'étape c2 ;
étape c5, la détermination pour savoir si start-x! =0, lorsque start-x! =0, le passage à l'étape c51, sinon, le passage à l'étape c6 ;
étape c51, la détermination pour savoir si global-map[x][y]! =0, lorsque global-map[x][y]! =0, le réglage de global-map[x+actul-x-offset][y] = global-map[x][y], global-map[x][y] = 0 et le passage à l'étape c8, sinon, le réglage de count++ et le passage à l'étape c8 ;
étape c6, la détermination pour savoir si global-map[x][y]! =0, lorsque global-map[x] [y] ! =0, le passage à l'étape c7, sinon, le passage à l'étape c8 ;
étape c7, le réglage de start-x = x, global-map[x+actul-x-offset][y] = global-map[x][y], global-map[x][y]=0 et le passage à l'étape c8 ; et
étape c8, la détermination pour savoir si count= =Width, lorsque count= =Width, l'arrêt, sinon, le réglage de y++ et le retour à l'étape c4,
dans lequel global-map est un réseau de cartes à quadrillage, Height et Width représentent la hauteur et la largeur du réseau de quadrillages global-map, start-x représente un numéro de ligne d'une première ligne avec des données non nulles, c'est-à-dire que les données depuis le début de la ligne doivent être translatées et count enregistre combien de quadrillages dans une ligne de données qui sont nulles ; et
lorsque actul-x-offset est supérieur à zéro, dans l'organigramme ci-dessus, une valeur initiale de x est définie sur Height-1, après chaque cycle, x-- est exécuté et le processus se termine jusqu'à x<0, le principe de translation de l'axe y étant le même que celui de l'axe x.

10. Procédé de création de la carte à quadrillage du robot intelligent selon la revendication 9, dans lequel, lorsqu'une fonction de translation est activée, une petite quantité de mémoire est ouverte en tant que tampon pour stocker des données de carte à quadrillage qui ont été hors limites et lorsque la carte à quadrillage entière est translatée, les données de quadrillage mises en mémoire tampon sont écrites sur la carte à quadrillage.

11. Procédé de création de la carte à quadrillage du robot intelligent selon la revendication 10, dans lequel le processus de lecture de données dans un processus de mémoire tampon est le suivant :
étape S1, le réglage de x-index=x+x-offset et y-index=y+y-offset ;
étape S2, la détermination pour savoir si (x-index, y-index) est dans la carte à quadrillage et si la fonction de translation de carte à quadrillage n'est pas activée, lorsque (x-index, y-index) est dans la carte à quadrillage et que la fonction de translation de carte à quadrillage n'est pas activée, le passage à l'étape S3, sinon, le passage à l'étape S2a ;
étape S2a, la lecture à partir de la mémoire tampon et le passage à l'étape S2b ;
étape S2b, la détermination pour savoir si la lecture est réussie, lorsque la lecture est réussie, le passage à l'étape S4, sinon, le passage à l'étape S2c ;
étape S2c, la détermination pour savoir si (x-index, y-index) est dans la carte à quadrillage, lorsque (x-index, y-index) est dans la carte à quadrillage, le passage à l'étape S2d, sinon, le retour à zéro et l'arrêt ;
étape S2d, la lecture directe les données de carte à quadrillage correspondantes et le passage à l'étape S4 ;
étape S3, la lecture directe des données de carte à quadrillage correspondantes et le passage à l'étape S4 ; et
étape S4, le renvoi d'une valeur lue et l'arrêt,
le processus d'écriture de données dans le processus de mémoire tampon est le suivant :
étape T1, la lecture d'une valeur (x, y) et le passage à l'étape T2 ;
étape T2, la détermination pour savoir si une valeur écrite est égale à la valeur lue, lorsque la valeur écrite est égale à la valeur lue, l'arrêt, sinon, le réglage de x-index=x+x-offset et y-index=y+y-offset et le passage à l'étape T3 ; et
étape T3, la détermination pour savoir si (x-index, y-index) est dans la carte à quadrillage et si la fonction de translation de carte à quadrillage n'est pas activée, lorsque (x-index, y-index) est dans la carte à quadrillage et que la fonction de translation de carte à quadrillage n'est pas activée, l'écriture directe des données dans les données de carte à quadrillage correspondantes et l'arrêt, sinon, l'écriture de données dans la mémoire tampon et l'arrêt,
dans lequel x et y sont les coordonnées de quadrillage auxquelles le robot intelligent est actuellement situé et x-index et y-index sont les coordonnées réelles de la carte à quadrillage correspondante.
